# EUROPÄISCHE PATENTSCHRIFT

(11) **EP 0 863 352 B1**
(45) Veröffentlichungstag und Bekanntmachung des Hinweises auf die Patenterteilung: **08.08.2001**
(21) Anmeldenummer: 97105915.9
(22) Anmeldetag: 10.04.1997
(51) Int. Cl.: F16L 11/112, F16L 11/08, F16L 11/115, E03C 1/02

(54) **Sanitärschlauch**
Sanitary hose
Tuyau souple sanitaire

(30) Priorität: 07.03.1997 DE 29704122 U
(43) Veröffentlichungstag der Anmeldung: 09.09.1998
(73) Patentinhaber: OLDOPLAST KUNSTSTOFFPROFILE GMBH & CO. KG, 45772 Marl (DE)
(72) Erfinder: Börgel, Helmut, 45772 Marl (DE)
(74) Vertreter: Herrmann-Trentepohl, Werner, Dipl.-Ing.

(56) Entgegenhaltungen:
- EP-A- 0 039 744
- DE-A- 1 425 453
- GB-A- 1 414 035

## Beschreibung

Die Erfindung betrifft einen Sanitärschlauch mit einem Innenschlauch, einer auf der Außenwand des Innenschlauchs aufgebrachten Verstärkung, einem Mittelschlauch, einer den Mittelschlauch außen umgebenden Wendel sowie einem Außenschlauch gemäß dem Oberbegriff von Anspruch 1.

Die erfindungsgemäßen Sanitärschläuche werden insbesondere als Verbindung einer Handbrause mit einer Badezimmerarmatur verwandt und dazu im allgemeinen bereits vom Hersteller an beiden Enden mit Anschlußelementen versehen, die bei den erfindungsgemäßen Sanitärschläuchen grundsätzlich beliebig ausgebildet sein kann. Solche Sanitärschläuche sind in Folge ihrer konzentrisch angeordneten Kunststoffschläuche biegsam und über ihre Länge zwischen den Anschlußarmaturen weitgehend knickfest ausgestaltet, so daß der freie Strömungsquerschnitt des konzentrischen innersten Kunststoffschlauches erhalten bleibt. Dies bewirkt im wesentlichen die unter dem konzentrischen Außenschlauch angeordnete Wendel, während die im Schlauch vorgesehene Bewehrung und der schichtweise Aufbau die Druckfestigkeit und Langlebigkeit garantieren soll.

Im allgemeinen sind in Europa Sanitärschläuche mit einem Innen/Außendurchmesser von 9/14 mm oder auch 9/15 mm üblich. Diese Schläuche garantieren eine bestimmte Druckfestigkeit. Sie wird im allgemeinen bei 20°C festgestellt und reicht bis etwa 30 bar.

Tatsächlich sind jedoch die von den Sanitärschläuchen aufzunehmenden Innendrücke inzwischen wesentlich gewachsen. Das liegt u. a. an den zunehmenden Drücken der Kalt- und Warmwasserversorgung, die ihrerseits häufig eine Folge der mit wachsender Stockwerkzahl zunehmenden Gebäudehöhen sind. Auch unter solchen Umständen muß aber die Betriebssicherheit gewährleistet sein.

Sanitärschläuche mit dem oben geschilderten Aufbau sind an sich bekannt. Gemäß EP 0 370 134 A ist eine Wendel vorgesehen, die bandförmig ausgestaltet ist und eine Bewehrung von parallel verlaufenden Fäden aufweist, so daß durch das Einbringen der Wendel in den Sanitärschlauch dessen Dicke nur unwesentlich vergrößert wird. Die Wendel besteht dazu aus einem hart eingestellten Weich-PVC und ist zur Erhöhung der Festigkeit mit einer Bewehrung versehen, die zusätzlich zu einer Vielzahl zu den Längskanten parallelen hochfesten Fäden aus eine Polyesterfolieneinlage mit einseitiger Metallbedampfung besteht. Dieses Konstrukt ist mit dem hart eingestellten Weich-PVC umspritzt. Die Zahl der Bewehrungsfäden des Wendelbandes ist der Banddicke und der Bandbreite angepaßt.

Diese bekannten Sanitärschläuche haben sich an und für sich bewährt, jedoch ist die Herstellung der Wendel ausgesprochen aufwendig. Zudem hat sich gezeigt, daß die Ausbildung der Wendel als Band mit einer doch nicht unerheblichen Breite zwar einen zuverlässigen Schutz gegen Abknicken des Schlauches bildet, jedoch Einbußen bei der Flexibilität mit sich bringt. Auch sind besondere Maßnahmen erforderlich, um Undichtigkeiten an den Anschlußarmaturen nach längerem Gebrauch oder sogar ein Abreißen des Schlauches zu vermeiden.

Anschlußelemente, mit denen der Schlauch an Badezimmerarmaturen angeschlossen werden kann, sind beispielsweise aus EP 728 978 A bekannt. Diese Anschlußelemente bieten ein erhöhtes Maß an Sicherheit gegen Undichtigkeit oder Abreißen. Anextrudierte und reaktiv mit dem Schlauchmaterial verbundene Anschlußelemente, die auch für die erfindungsgemäßen Schläuche geeignet sind, sind ferner aus DE 30 49 501 A bekannt.

In der Regel weist der Innenschlauch eine Fadenbewehrung auf, die aus bruchfesten Kunststofffäden bestehen kann und dem vergleichsweise weichen Innenschlauch die erforderliche Zugfestigkeit gibt. Die Wendel besteht ihrerseits aus einem meist duroplastischen Kunststoffband, das mit dem Mittelschlauch durch Verklebung verbunden ist. Dadurch wird die Verschiebung des Bandes der Wendel auf dem Mittelschlauch verhindert. Die Wendel trägt einerseits zur Druckfestigkeit bei und gewährleistet andererseits zwischen den Windungen wendelförmige Hohlräume zwischen dem Mittel- und Außenschlauch. Diese Hohlräume geben dem Sanitärschlauch Flexibilität, ohne das der innere Strömungsquerschnitt wesentlich verengt wird oder die Gefahr des Abknickens besteht. Grund hierfür ist, daß sich der Außenschlauch zwischen den einzelnen Gängen der Wendel in Falten legen kann, und damit eine Materialreserve für die Außenkrümmung bildet, während die Hohlräume den Materialüberschuß an der Innenkrümmung des Sanitärschlauches aufnehmen.

Bei einem gattungsgemäßen Sanitärschlauch gemäß EP-A-039 744 weist die Wendel einen Querschnitt mit dezidiertem Unterschied in Breite und Länge des Querschnitts auf, wodurch sich beim Verbiegen ein Verkanten und damit ein Verknicken des Sanitärschlauches ergeben kann. Ferner sind Wendeln mit kreisrundem Querschnitt bei Sänitärschläuchen bekannt (so etwa GB-A-1 414 035), jedoch mit vergleichsweise großem Abstandsverhältnis zwischen den Wendeln. Der Erfindung liegt die Aufgabe zugrunde, einen Sanitärschlauch der vorstehend genannten Art bereitzustellen, der bei hoher Betriebssicherheit gleichzeitig ein hohes Maß an Flexibilität und Krümmungsfähigkeit besitzt, dauerhaft ist, ein akzeptables Aussehen aufweist und einfach unter akzeptablen Kosten hergestellt werden kann.

Diese Aufgabe wird mit einem Sanitärschlauch der eingangs genannten Art gelöst, bei dem die Wendel einen runden Querschnitt aufweist und so gewickelt ist, daß zwischen den einzelnen Windungen ein Abstand bleibt, der ¼ bis 1/1 des Durchmessers des Hart-PVC-Strangs der Wendel ausmacht.

Die Erfindung beruht auf der Erkenntnis, daß ein Hart-PVC-Strang mit runden Querschnitt die für den Schlauch geforderte nötige Druckfestigkeit ergibt. Im Gegensatz zu den bisherigen Lösungen, in denen im wesentlichen Bänder aus Weich-PVC verwandt wurden, um die Wendel auszubilden, ist eine innere Faserverstärkung nicht mehr erfoderlich. Hierdurch ergibt sich ein Einsparpotential bei den Produktionskosten, ohne das sich dies in der Qualität des Produktes negativ auswirkt.

Gleichzeitig hat sich gezeigt, daß die erfindungsgemäß eingesetzte Hart-PVC-Wendel eine verbesserte Flexibilität des Schlauches mitsichbringt. Durch den runden Querschnitt ist der zwischen den Wendel verbleibende Freiraum für den Mittel- und den Außenschlauch besser zugänglich, was die Flexibilität erhöht. Bei Einhaltung eines Abstands der einzelnen Windungen der Wendel zueinander von ¼ bis 1/1, vorzugsweise ½ des Durchmessers des Hart-PVC-Strangs wird ein Optimum hinsichtlich Flexibilität und Druckfestigkeit erzielt.

Um die Druckfestigkeit und Flexibilität auf Dauer zu gewährleisten, wird die Wendel aus Hart-PVC, die sich zwischen den Mittel- und dem Außenschlauch befindet, mit Hilfe einer üblichen Klebemasse auf dem Mittelschlauch fixiert. Hierduch können Relativbewegungen zwischen dem Mittelschlauch und der ihn umgebenden Wendel zuverlässig ausgeschlossen werden. Der zwischen den Windungen des PVC-Strangs verlaufende wendelförmige Hohlraum bleibt dadurch über die Lebensdauer des Schlauches konstant.

Durch die erfindungsgemäße Ausgestaltung des Sanitärschlauchs ergeben sich zusätzliche gestalterische Möglichkeiten. So ist es möglich, den Außenschlauch transparent auszugestalten, so daß die darunterliegenden Windungen der Wendel wie auch der Mittelschlauch sichtbar bleiben. Bei ggfs. unterschiedlicher farblicher Ausgestaltung der Wendel und des Mittelschlauches ergibt sich die Möglichkeit, den Sanitärschlauch farblich auf seine Umgebung anzustimmen. Die runde Ausgestaltung der Wendel ergibt bei dieser Ausgestaltung eine zusätzliche Raumwirkung.

Die Bewehrung besteht vorzugsweise aus Fäden, die in regelmäßigen Abständen über den Umfang des Innenschlauches angeordnet sind und zweckmäßigerweise längs verlaufen.

Bei der Herstellung des erfindungemäßen Sanitärschlauches laufen die Bewehrungsfäden in ein Extrudergesenk ein, aus dem der Innenschlauch 2 und der Mittelschlauch 4 austreten. Dieses Vorprodukt wird dann unmittelbar in ein zweites Extrudergesenk eingeführt, in welches das Vormaterial, d. h. der bereits mit Kleber beschichteteHart-PVC-Strang eingeführt wird. Aus diesem Gesenk wird der Außenschlauch extrudiert und gleichzeitig in den wendelförmigen Hohlraum zwischen den einzelnen Windungen der Wendel eingefaltet. Damit diese Hohlräume offen bleiben, wird Preßluft zugeführt, die verhindert, daß sich das Material des Außenschlauches im Faltenbereich mit dem Mittelschlauch verbindet. Während des Extrudiervorganges wird die Kleberbeschichtung der Wendel aktiviert, so daß sich eine feste Verbindung der Hart-PVC-Wendel mit dem Mittel- und dem Außenschlauch ergibt. Innen- und Mittelschlauch mit den dazwischen liegenden Verstärkungsfäden werden während des Extrudiervorganges miteinander verschweißt.

Die Erfindung wird durch die beiliegenden Abbildungen näher erläutert. Von diesen zeigt
- Fig. 1: einen Sanitärschlauch im Längsschnitt, der an der Schlauchmitte abgebrochen ist und
- Fig. 2: einen Schnitt längs der Line II-II von Fig. 1.

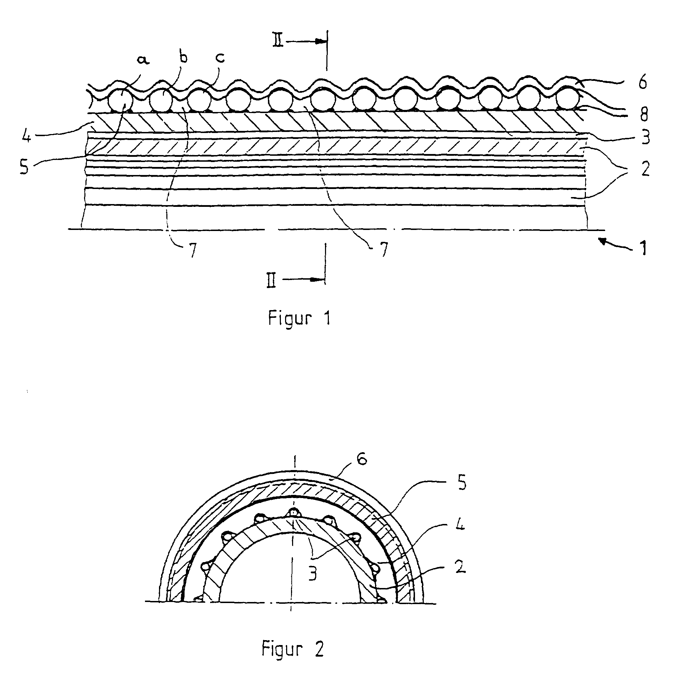

Der in Fig. 1 allgemein mit 1 bezeichnete Sanitärschlauch ist ein Brauseschlauch für den eingangs bezeichneten Zweck. Dieser Schlauch besteht vollständig aus Kunststoff. Er weist einen extrudierten Innenschlauch 2 auf, welcher mit einer Mehrzahl von Längsfäden 3 verstärkt ist, beispielsweise 16 gleichmäßig über den Umfang verteilten Längsfäden. Die Längsfäden bestehen gewöhnlich aus einem festen Werkstoff, können aber im Gegensatz zu den übrigen Materialien auch aus Glas- oder Mineralfasern bestehen. Bei der üblichen Querabmessungen der Schläuche genügen im allgemeinen 8 Längsfäden, die gleichmäßig über den Umfang des Innenschlauches 2 verteilt angeordnet sind, jedoch ist eine Anzahl von beispielsweise 16 zweckmäßig, um eine erhöhte Zugfestigkeit zu erzielen.

Der Sanitärschlauch 1 weist ferner einen Mittelschlauch 4 auf, der auf den Innenschlauch 2 unter Einschluß der Längsfäden 3 aufextrudiert ist. Mittelschlauch und Innenschlauch mit den dazwischen liegenden Verstärkungsfäden 3 bilden eine durch den Extrudiervorgang bedingte miteinander verschweißte Einheit. Eine Verklebung ist allerdings ebenfalls möglich. Als geeignete Materialien für den Innenschlauch und den Mittelschlauch kommt beispielsweise Weich-PVC in Frage.

Auf dem Innenschlauch befindet sich der als Wendel angeordnete Hart-PVC-Strang 5. Der Strang hat einen runden Querschnitt und ist so um den Mittelschlauch gelegt, daß sich zwischen den einzelnen Windungen der Wendel Hohlräume 7 ausbilden. Diese Hohlräume nehmen naturgemäß ebenfalls einen wendelförmigen Verlauf parallel zu dem Hart-PVC-Strang und weisen eine definierte Weite auf, die zweckmäßigerweise ¼ bis 1/1 des Durchmessers des PVC-Strangs ausmacht. Bevorzugt ist eine lichte Weite dieser Hohlräume 7 von etwa ½ des Durchmessers des PVC-Strangs. Entsprechend haben die einzelnen Windungen a, b, c ... der Wendel 5 einen Abstand zueinander von etwa ¼ bis 1/1 des Strangdurchmessers.

Aufgebracht auf die Wendeln befindet sich ein Außenschlauch 6 aus vorzugsweise transparentem Weich-PVC. Dieser Außenschlauch 6 paßt sich dabei an die von den Wendeln gebildete Oberfläche an, d. h. er ist in Wellen gelagert, wobei die Wellenkämme von den darunter liegenden Windungen der Wendel definiert werden und die Wellentäler von den darunter liegenden Hohlräumen 7 zwischen den Windungen der Wendel.

Um die Wendel in ihrer Position zu fixieren, ist sie zweckmäßigerweise mit den umgegebenden Schichten 4 und 6 verklebt, wobei ein üblicher Kleber zum Einsatz kommen kann, der unter den Herstellungsbedingungen erweicht und die Verbindung herbeiführt. Die Klebestellen bzw. Kontaktstellen sind in Fig. 1 mit der Bezugsziffer 8 bezeichnet.

Die in den Schlauch eingebrachten Bewehrungsfäden 3 bestehen vorzugsweise aus einem festen Kunststoffmaterial, beispielsweise aus Polyester oder Kevlar und haben eine Stärke von beispielsweise etwa 1.100 dtex. Durch die Kombination der einzelnen Schichten und ihr Zusammenwirken erhält der Schlauch eine Druckfestigkeit von bis zu 60 bar.

Fig. 2 zeigt einen Querschnitt durch den Schlauch von Fig. 1 entlang der Schnittlinie II-II. Um den nicht bezifferten freien Hohlraum im Schlauchinneren sind konzentrisch angeordnet der Innenschlauch 2, die darauf längsverlaufenden Bewehrungsfäden 3, der darüber angeordnete und mit dem Innenschlauch verschweißte Mittelschlauch 4, die Wendel 5 mit den zwischen den einzelnen Windungen liegenden Hohlräumen 7 und die Außenhaut 6. Die Wendel 5 ist sowohl mit dem Mittelschlauch 4 als auch dem Außenschlauch 6 verklebt.

## Patentansprüche

1. Flexibler Sanitärschlauch, mit einem Innenschlauch (2), einer auf der Außenwand des Innenschlauchs (2) aufgebrachten Verstärkung (3), einem Mittelschlauch (4), einer den Mittelschlauch außen umgebenden Wendel (5) sowie einem Außenschlauch (6), wobei die Wendel (5) aus einem Hart-PVC-Strang gebildet ist, dadurch gekennzeichnet, daß die Wendel (5) einen runden Querschnitt aufweist und so gewickelt ist, daß zwischen den einzelnen Windungen (a, b, c) ein Abstand bleibt, der ¼ bis 1/1 des Durchmessers des Hart-PCV-Strangs der Wendel (5) ausmacht.

2. Sanitärschlauch nach Anspruch 1, dadurch gekennzeichnet, daß die Verstärkung (3) die Form einer Fadenbewehrung hat.

3. Sanitärschlauch nach Anspruch 2, dadurch gekennzeichnet, daß die Fadenbewehrung aus Längsfäden besteht, die gleichmäßig über den Umfang des Innenschlauchs (2) verteilt sind.

4. Sanitärschlauch nach einem der vorstehenden Ansprüche, dadurch gekennzeichnet, daß der Außenschlauch (6) transparent ist.

5. Sanitärschlauch nach Anspruch 4, dadurch gekennzeichnet, daß die Wendel (5) und der Mittelschlauch (4) unterschiedlich gefärbt sind.

6. Sanitärschlauch nach einem der vorstehenden Ansprüche, dadurch gekennzeichnet, daß der Abstand der einzelnen Windungen (a, b, c) etwa ½ des Durchmessers des Hart-PVC-Strangs der Wendel (5) ausmacht.

7. Sanitärschlauch nach einem der vorstehenden Ansprüche, dadurch gekennzeichnet, daß die Wendel (5) aus massivem Hart-PVC besteht.

8. Sanitärschlauch nach einem der vorstehenden Ansprüche mit Anschlußelementen für Sanitäreinrichtungen.

## Claims

1. Flexible sanitary hose including an inner hose (2), a reinforcement (3) positioned on the outer wall of the inner hose (2), an intermediate hose (4), a coil (5) externally surrounding the intermediate hose and an outer hose (6), the coil (5) being constituted by a hard PVC strand, characterised in that the coil (5) has a circular cross-section and is so wound that a gap remains between the individual convolution (a, b, c) which is ¼ to 1/1 of the diameter of the hard PVC strand of the coil (5).

2. Sanitary hose as claimed in Claim 1, characterised in that the reinforcement (3) has the form of a filamentary sheathing.

3. Sanitary hose as claimed in Claim 2, characterised in that the filamentary sheathing comprises longitudinal filaments which are uniformly distributed over the periphery of the inner hose (2).

4. Sanitary hose as claimed in one of the preceding claims, characterised in that the outer hose (6) is transparent.

5. Sanitary hose as claimed in Claim 4, characterised in that the coil (5) and the intermediate hose (4) are differently coloured.

6. Sanitary hose as claimed in one of the preceding claims, characterised in that the spacing of the individual convolutions (a, b, c) is about ½ of the diameter of the hard PVC strand of the coil (5).

7. Sanitary hose as claimed in one of the preceding claims, characterised in that the coil (5) comprises massive hard PVC.

8. Sanitary hose as claimed in one of the preceding claims including connecting elements for sanitary devices.

## Revendications

1. Tube flexible sanitaire, comportant un flexible intérieur (2), un renfort (3) appliqué sur la paroi externe du flexible intérieur (2), un flexible médian (4), une spirale (5) entourant extérieurement le flexible médian, ainsi qu'un flexible extérieur (6), la spirale (5) étant constituée d'un cordon de PVC dur,
caractérisé en ce que
la spirale (5) présente une section circulaire et est enroulée de telle façon qu'entre les différentes spires (a, b, c), il reste un écartement égal à ¼ à 1/1 du diamètre du cordon de PVC dur de la spirale (5).

2. Flexible sanitaire suivant la revendication 1, caractérisé en ce que le renfort (3) a la forme d'une armature de fibres.

3. Flexible sanitaire suivant la revendication 2, caractérisé en ce que l'armature de fibres est constituée de fibres longitudinales, qui sont réparties régulièrement sur la périphérie du flexible intérieur (2).

4. Flexible sanitaire suivant l'une des revendications précédentes, caractérisé en ce que le flexible extérieur (6) est transparent.

5. Flexible sanitaire suivant la revendication 4, caractérisé en ce que la spirale (5) et le flexible médian (4) présentent des couleurs différentes.

6. Flexible sanitaire suivant l'une des revendications précédentes, caractérisé en ce que la distance des différentes spires (a, b, c) est sensiblement la moitié du diamètre du cordon de PVC dur formant la spirale (5).

7. Flexible sanitaire suivant l'une des revendications précédentes, caractérisé en ce que la spirale (5) est constituée de PVC dur massif.

8. Flexible sanitaire suivant l'une des revendications précédentes, comportant des éléments de raccordement pour installations sanitaires.
